# EUROPEAN PATENT APPLICATION

(11) **EP 2 579 500 A1**
(43) Date of publication of application: **10.04.2013**
(21) Application number: 10852528.8
(22) Date of filing: 04.06.2010
(51) Int. Cl.: H04L 9/16, H04L 9/08

(54) **PROCESSING DEVICE, PROCESSING METHOD, AND PROCESSING PROGRAM**

(71) Applicant: Fujitsu Limited, Kawasaki-shi, Kanagawa 211-8588 (JP)
(72) Inventor: MIZUMAKI, Masayoshi, Kahoku-shi Ishikawa 929-1192 (JP)
(74) Representative: HOFFMANN EITLE
(86) International application number: PCT/JP2010/059546
(87) International publication number: WO 2011/151924

(57) **Abstract**

Provided is a processing device (3) for executing a predetermined process associated with information to be processed at preset key time, including a determination unit (301) that determines whether or not key time at which a previous process was performed is included in a check period which is between the key time and current time, at a check timing set for each predetermined time, and a processing unit (302) that executes the predetermined process which is to be performed at the key time, when the determination unit (301) determines that the key time is included in the check period.

## Description

### FIELD

The present invention relates to a processing device, a processing method and processing program for executing predetermined process associated with information to be processed at preset time.

### BACKGROUND

In the related art, there has been a technology to perform synchronization between RAID (Redundant Arrays of Inexpensive Disks) devices in places distant from each other by copy between remote enclosures using iSCSI (internet Small Computer System Interface). In addition, in such iSCSI copy between remote enclosures, it is known that each remote enclosure shares an encryption key and achieves synchronization by IPsec (Security architecture for Internet Protocol) for security.

IPsec is the standard to perform encryption in the IP level, and the object thereof is to secure the security by encrypting IP packets and performing transmission and reception between the devices.
In IPsec, a shared key encryption method is used for the encryption of IP packets. The shared key encryption method is for performing encrypted communication by using a same encryption key in devices of a transmission side and a reception side, and each of the devices (for example, remote enclosures) of transmission side and reception side performs sharing of the encryption key in advance and establishes an IPsec connection.

In the devices of transmission side and reception side, the establishment of IPsec connection is performed by using the IKE (Internet Key Exchange) protocol. Specifically, between devices performing IPsec connection, IKE establishes the IPsec connection by performing two phases of phase 1 and phase 2. The phase 1 is to establish ISAKMP (Internet Security Association and Key Management Protocol) SA (Security Association) so as to determine an encryption method and generate an encryption key to be used in the phase 2. The phase 2 is to establish IPsec SA so as to determine the encryption method and the encryption key and the like to be used in IPsec.

When two phases have been completed, the encrypted communication using IPsec can be performed between the devices.
In addition, for example, as in a case where the iSCSI copy between remote enclosures is performed by using RAID devices as each of devices of transmission side and reception side, the encryption key is set with respect to a module included in each RAID device for realizing a function of IPsec, depending on RAID devices. Specifically, each of RAID devices creates the encryption key by the same logic (for example, a function for creating the encryption key with information of date as an argument) by itself, so that the encryption key can be shared without the IKE described above.

Herein, each device which performs the encrypted communication using the IPsec performs a process of providing a predetermined valid period to the encryption key, invalidating the encryption key for which the valid period is passed, and switching over to a new encryption key, for improvement of the security.
For example, each device determines whether or not the time of a clock (current time) included in each device is the time (for example, around 0 o'clock, 8 o'clock, 16 o'clock, or the like) at which a predetermined process associated with the switching of encryption key information (for example, generating and setting of encryption key, and switching of validation/invalidation of encryption key, or the like) is to be performed. Then, if it is the time at which the predetermined process is to be performed, each device performs switching of the encryption key by executing the corresponding process.

In addition, in the related art, a technology for executing the generation and updating of the encryption key when the preset time for exchanging the key approaches is disclosed (for example, Patent Literatures 1 and 2).

### Citation List

### Patent Literature

Patent Literature 1: Japanese Laid-open Patent Publication No. 2005-136870
Patent Literature 2: Japanese Laid-open Patent Publication No. 2004-166153

### SUMMARY OF THE INVENTION

### PROBLEMS TO BE SOLVED BY THE INVENTION

As described above, each device performing encrypted communication using IPsec performs a generation and a setting of encryption key, or a switching of validation/invalidation of encryption key based on time of clock included in each device. Generally, in such clocks, since deviations are generated, for example, of about several minutes over a month and about several hours over several years, each enclosure performs a regular change (adjustment) of time.
Herein, there is a case of generating a time change to skip the time at which predetermined process associated with encryption key information is to be performed by time changing (adjusting) of a clock. For example, when the time of the clock before the change is earlier than (in the past compared with) the updated time of the encryption key information and the time of the clock after the change is later than (in the future compared with) the updated time of the encryption key information, in the device in which the time is changed, the predetermined process associated with the encryption key information which is to be performed at the skipped (jumped) time by the time change of the clock, is not performed. Accordingly, there is a problem that the encryption key information of the device in which the time is changed and a device to be communicated with do not coincide with each other.

Hereinafter, an updating procedure of encryption key for each device when the time change is generated in a device of the transmission side from devices performing the encrypted communication using IPsec described above, will be described using a transmission side enclosure and a reception side enclosure.

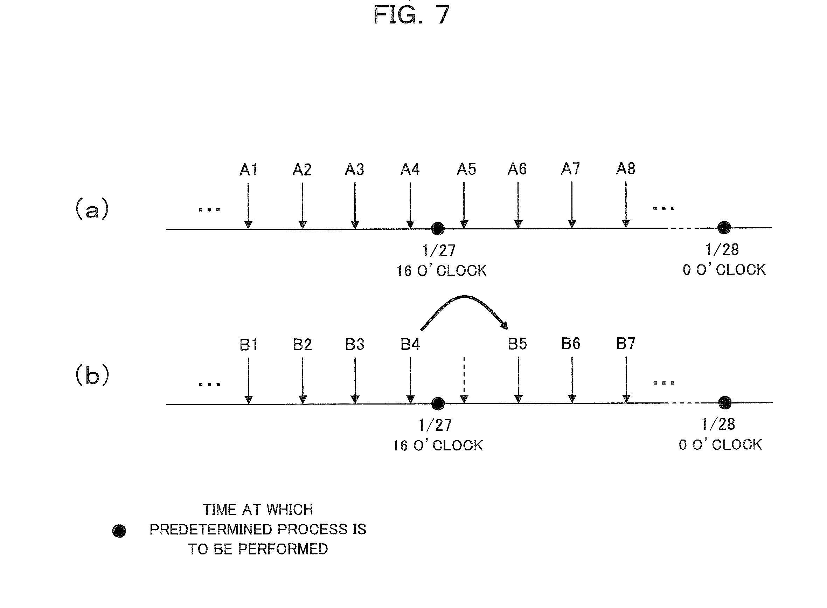

Figs. 7(a) and 7(b) are views illustrating a comparing timing of current time and time at which predetermined process is to be performed in the transmission side enclosure.

Fig. 7(a) illustrates an example of a normal operation, that is, a case where the time of the clock of the transmission side enclosure is not changed. Fig. 7(b) illustrates an example of a case where the change of the time of the clock of the reception side enclosure is generated.
Fig. 8 is a view illustrating an updating procedure of the encryption key of the transmission side enclosure and the reception side enclosure in a case where the time change is generated in the transmission side enclosure.

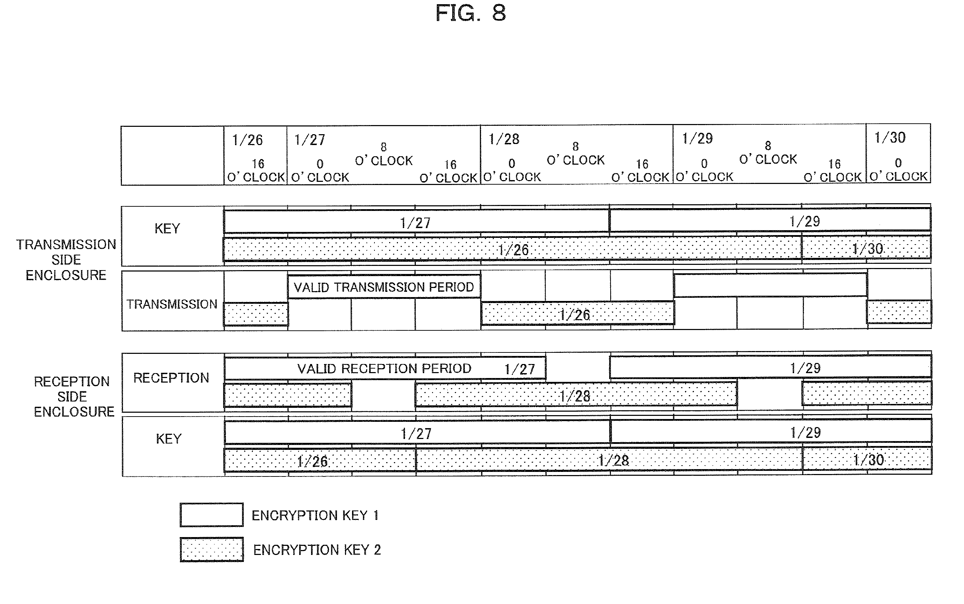

In the encrypted communication by each of devices performing the encrypted communication using IPsec, the transmission side enclosure is a device on a side transmitting data, and the reception side enclosure is a device on a side receiving the data. For the sake of convenience, in Figs. 7(a) and 7(b), and Fig. 8, the transmission side enclosure and reception side enclosure are distinguished from each other, however in practice, the device as the transmission side enclosure and the device as the reception side enclosure perform interactive transmission and reception between each other. Accordingly, each process in the transmission side enclosure and the reception side enclosure is executed in each of devices performing the encrypted communication using IPsec.

Herein, the transmission side enclosure and the reception side enclosure respectively update the encryption key every day for improvement of security.
In addition, the transmission side enclosure and the reception side enclosure have two encryption keys, and may switch validation/invalidation of the transmission and reception by each encryption key. When the reception by both of two encryption keys is valid, the reception may be performed by any of encryption keys.

The transmission side enclosure and the reception side enclosure determine every hour, whether or not the current time which is the time of the clock included in itself is a time (for example, around 0 o'clock, 8 o'clock, 16 o'clock, or the like) at which a predetermined process (for example, a generation and setting of encryption keys, a switching of validation/invalidation of encryption keys, or the like) associated with a switching of encryption keys information is to be performed.
For example, at around 16 o'clock, the transmission side enclosure generates and sets an encryption key 1 for the next day, and the reception side enclosure generates and sets the encryption key 1 for the next day and performs a process of validating the reception by the encryption key 1 for the next day. In addition, at around 0 o'clock, the transmission side enclosure validates the transmission by the encryption key 1 for the day and performs a process of invalidating the transmission by an encryption key 2 for the previous day. Further, at around 8 o'clock, the reception side enclosure performs a process of invalidating the reception by the encryption key 2 for the previous day.

After this time, the transmission side enclosure and the reception side enclosure execute repeatedly each process at around 16 o'clock, 0 o'clock, and 8 o'clock described above, and each enclosure uses two encryption keys for each other and updates the encryption key information.
The transmission side enclosure and the reception side enclosure may change (adjust) the time of the clock included in themselves, at predetermined timing or by an external command, respectively.
As illustrated in Figs. 7(a) and 7(b), the transmission side enclosure determines whether or not the current time is the time at which the predetermined process associated with the switching of the encryption key information is to be performed, at time points of arrows indicating A1 to A8 and B1 to B7. Although not illustrated, the transmission side enclosure performs determination in the same manner before A1 and after A8, and before B1 and after B7. Herein, each of intervals of A1 to A8 and B1 to B7 is one hour.

In Fig. 7(a), at the time points of A1 to A4 and A6 to A8, since the current time is not the time (herein, around 16 o'clock on 27th of January) at which the predetermined process associated with the switching of the encryption key information is to be performed, the transmission side enclosure does not execute the predetermined process.
On the other hand, at the time point of A5, the transmission side enclosure determines that the current time is around 16 o'clock on 27th of January as the time at which the predetermined process associated with the switching of the encryption key information is to be performed, and performs the predetermined process which is to be performed at 16 o'clock on 27th of January, that is, the process of generating and setting the encryption key 2 for 28th of January.

On the contrary, in Fig. 7(b), in each of the time points of B1 to B7, since the current time is not the time (herein, around 16 o'clock on 27th of January) at which the predetermined process associated with the switching of the encryption key information is to be performed, the transmission side enclosure does not execute the predetermined process.
Herein, in the example illustrated in Fig. 7(b), after the transmission side enclosure compares the current time and the time at which the predetermined process associated with the switching of the encryption key information is to be performed at the time point of B4, the time of the clock of the transmission side enclosure is changed before approaching next hour for which a timer is set. That is, it is assumed that the time of the clock of the transmission side enclosure is changed at around 15 o'clock to around 17 o'clock on 27th of January. Then the transmission side enclosure compares the current time and the time at which the predetermined process associated with the switching of the encryption key information is to be performed at the time point of B5. In this case, since the current time is not around 16 o'clock on 27th of January as the time at which the predetermined process associated with the switching of the encryption key information is to be performed at the time point of B5, the transmission side enclosure does not execute the predetermined process.

As described above, in the state of Fig. 7(b), in the transmission side enclosure, the process of generating and setting of the encryption key 2 for 28th of January which is to be performed at 16 o'clock on 27th of January is not performed. At this time, in the transmission side enclosure, as illustrated in Fig. 8, since the generating and setting of the encryption key 2 for 28th of January which is to be performed at 16 o'clock on 27th of January is not performed, the encryption key 2 from 16 o'clock on 27th of January to 16 o'clock on 29th of January is the encryption key for 26th of January.

Accordingly, in the transmission side enclosure, at 0 o'clock on 28th of January, the transmission by the encryption key 2 of 26th of January is validated and the transmission by the encryption key 1 of 27th of January is invalidated. The encryption key for 26th of January which is set as encryption key 2 is used in transmission between 0 o'clock on 28th of January and 0 o'clock on 29th of January.
On the other hand, in the reception side enclosure in which the change of the time is not generated, the encryption key 1 for 27th of January and the encryption key 2 for 28th of January are validated between 0 o'clock and 8 o'clock on 28th of January, and the encryption key 2 for 28th of January is validated between 8 o'clock and 16 o'clock on 28th of January. In addition, the encryption key 2 for 28th of January and the encryption key 1 for 28th of January are validated between 16 o'clock on 28th of January and 0 o'clock on 29th of January.

As described above, since a packet transmitted from the transmission side enclosure is encrypted by the encryption key 2 for 26th of January but the encryption key 2 for 26th of January is not set in the reception side enclosure, in the reception side enclosure, the encryption key to decrypt the encrypted packet does not coincide therewith. For this reason, in the reception side enclosure, a received packet may not be decrypted between 0 o'clock on 28th of January and 0 o'clock on 29th of January.

Hereinbefore, the case of changing the time of the clock in the transmission side enclosure is described by referring to Figs. 7(a) and 7(b) and Fig. 8, and a case of changing the time of the clock in the reception side device is the same.
As described above, in a case of generating a time change to skip the time at which predetermined process associated with encryption key information is to be performed, the encryption key information of the enclosure in which time change is performed, and the encryption information of the enclosure in which the time change is not performed do not coincide with each other. Thus, it is a problem that the encrypted communication between the enclosures is not normally performed.

Considering the above described points, one of objects of the present invention is to set the information to be processed of the processing device which performs the time change in a normal state, even when generating the time change to skip the time at which predetermined process associated with information to be processed is to be performed.
Not only the object described above, but obtaining a functional effect which is caused by each configuration illustrated in description of embodiments which will be described later and which is not obtained in the related art is also one of the objects of the present invention.

### MEANS TO SOLVE THE PROBLEMS

A processing device of the present invention for executing predetermined process associated with information to be processed at preset key time, includes: a determination unit that determines whether or not key time is included in a check period which is between key time at which previous process was performed and current time, at a check timing set for each predetermined time; and a processing unit that executes the predetermined process which is to be performed at the key time, when the determination unit determines that the key time is included in the check period.

Further, another processing device of the present invention for executing predetermined process associated with information to be processed at preset key time, includes: a determination unit that determines whether or not key time is included in a check period which is between previous process time and the current time at the check timing set for each predetermined time; and a processing unit that executes the predetermined process which is to be executed at the key time when the determination unit determines that the key time is included in the check period.

Furthermore, a processing method of the present invention for executing predetermined process associated with information to be processed at preset key time, includes: a step of determining whether or not key time is included in a check period which is between key time at which the previous process was performed and current time, at a check timing set for each predetermined time; and a step of executing the predetermined process which is to be performed at the key time, when it is determined that the key time is included in the check period.

Further, a processing program of the present invention for realizing a function of executing predetermined process associated with information to be processed at preset key time in a computer, operates the computer to function as: a determination unit that determines whether or not key time is included in a check period which is between key time at which previous process was performed and current time, at a check timing set for each predetermined time; and a processing unit that executes the predetermined process which is to be performed at the key time, when the determination unit determines that the key time is included in the check period.

### EFFECT OF THE INVENTION

According to the technology of the disclosure, even when generating the time change to skip the time at which the predetermined process associated with the information to be processed is to be performed, the information to be processed of the processing device in which the time change is performed may be set in a normal state.

### BRIEF DESCRIPTION OF DRAWINGS

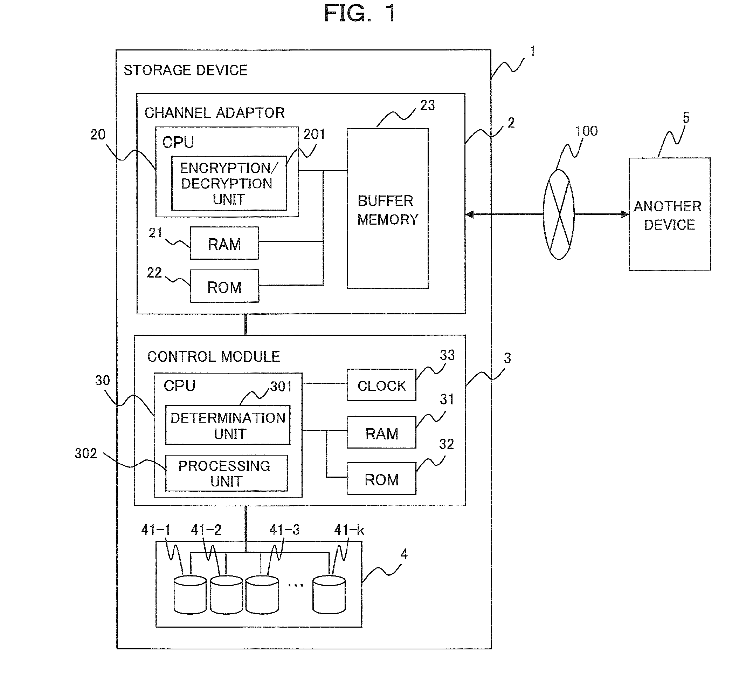

Fig. 1 is a view schematically illustrating a configuration example of a storage device of an example of a first embodiment.

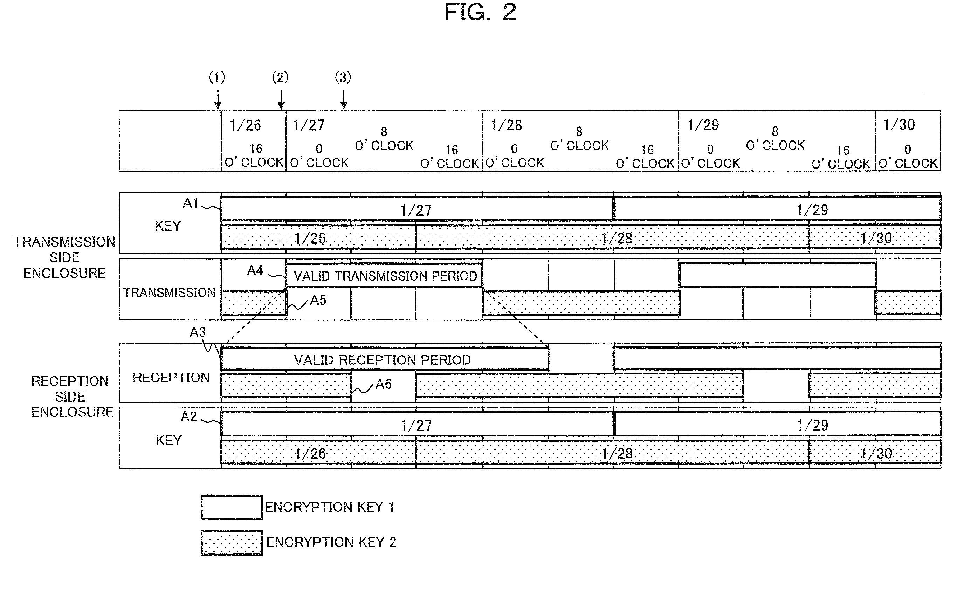

Fig. 2 is a view illustrating an updating procedure of encryption keys of a transmission side enclosure and a reception side enclosure as an example of the first embodiment.

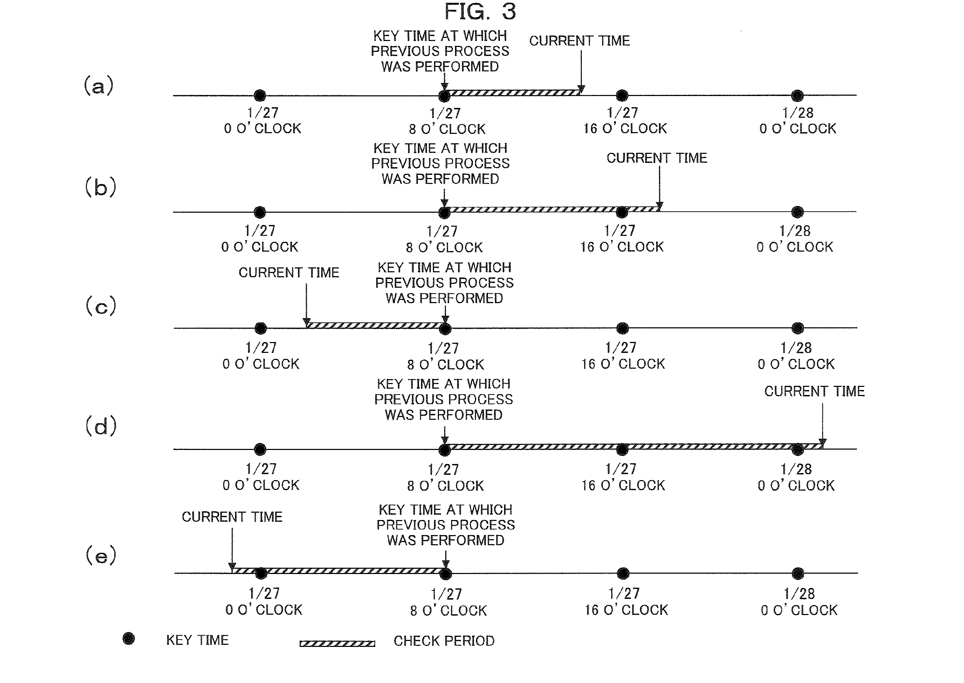

Figs. 3(a) to 3(e) are views for illustrating a method determining whether or not key time is included in a check period by a determination unit of a storage device as an example of the first embodiment.

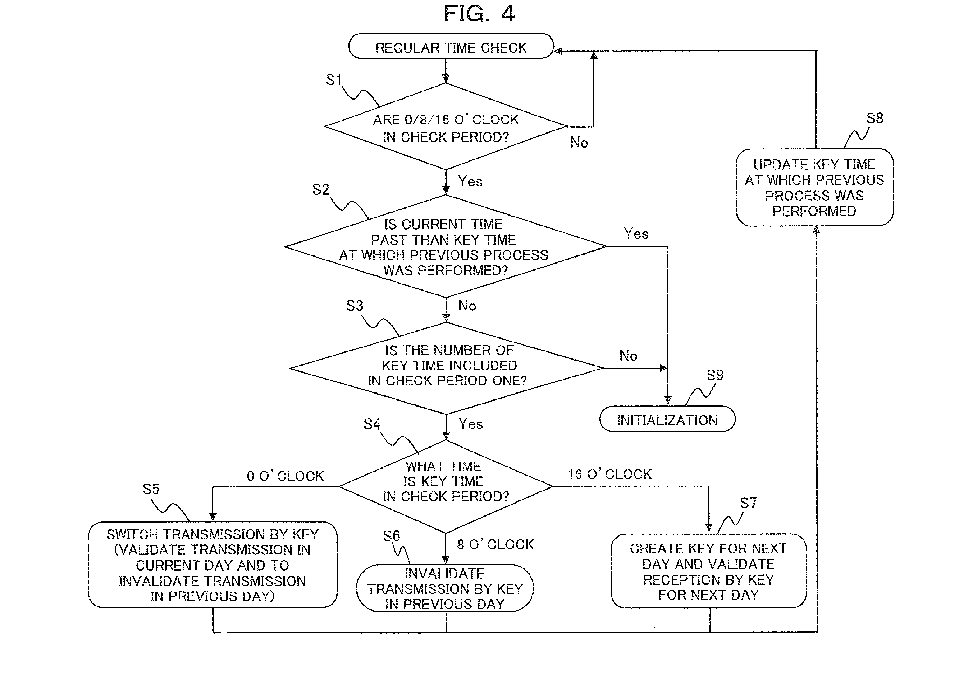

Fig. 4 is a flowchart for illustrating operations of a determination unit and a processing unit of a storage device as an example of the first embodiment.

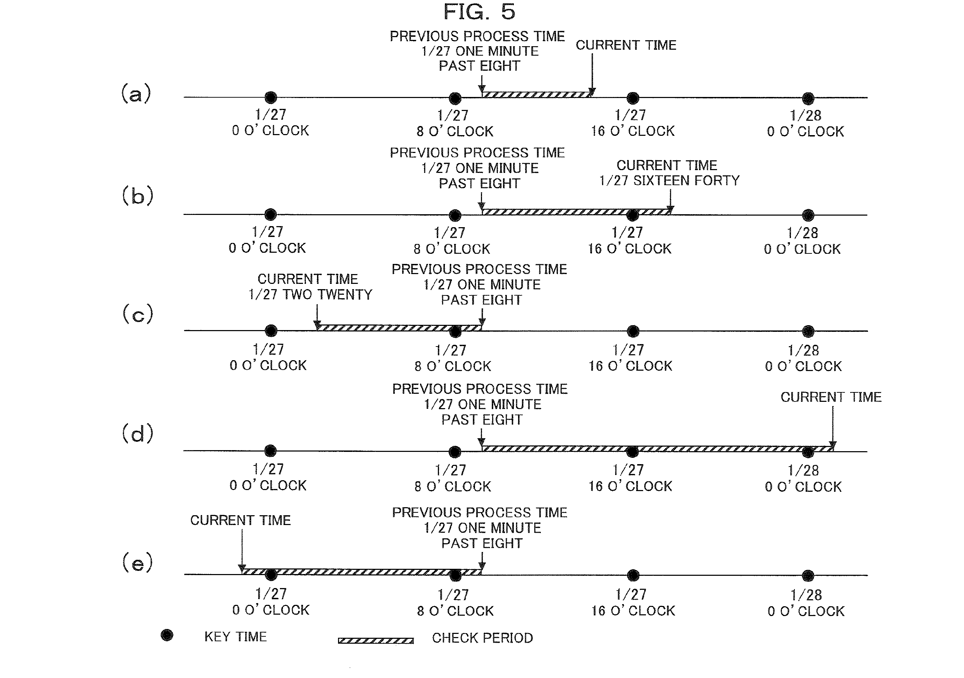

Figs. 5(a) to 5(e) are views for illustrating modification examples of a method determining whether or not key time is included in a check period by a determination unit of a storage device as an example of the first embodiment.

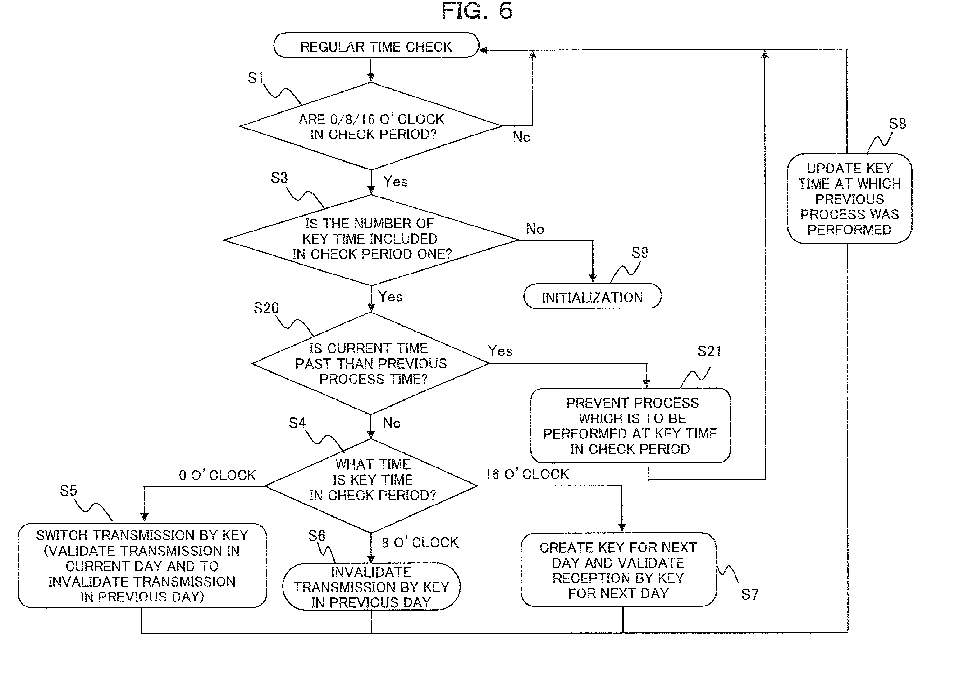

Fig. 6 is a flowchart for illustrating modification examples of operations of a determination unit and a processing unit of a storage device as an example of the first embodiment.
Figs. 7(a) and 7(b) are views illustrating a comparing timing of current time and time at which the predetermined process is to be performed in a transmission side enclosure.
Fig. 8 is a view illustrating an updating procedure of encryption keys of a transmission side enclosure and a reception side enclosure in a case of generating a time change in the transmission side enclosure.

### DESCRIPTION OF EMBODIMENTS

Hereinafter, the embodiments of the present invention will be described with reference to the drawings.

### (A) First Embodiment

### (A-1) Configuration of First Embodiment

Fig. 1 is a view schematically illustrating a configuration example of a storage device 1 as an example of a first embodiment.

As illustrated in Fig. 1, the storage device 1 includes a channel adaptor 2, a control module 3, and a memory unit 4.
The storage device 1 is connected to another device 5 in a transmittable and receivable manner between each other through a network 100 such as Internet or LAN (Local Area Network), and performs encrypted communication using IPsec. Herein, in the embodiment, the another device 5 has a configuration which is almost the same as the storage device 1, and for the sake of convenience, the drawings and the description are not made.

The encryption communication using IPsec between the storage device 1 and the another device 5 may be performed by known various methods, and the detailed description thereof is not made.
The storage device 1 performs reading/writing of data with respect to hard disk drives (HDD) 41-1 to 41-k (k is a natural number) of the memory unit 4 which will be described later. For example, RAID devices or the like may be used as the storage device 1 and the another device 5.

In the embodiment, the storage device 1 and another device 5 perform copy between remote enclosures. That is, the another device 5 functions as a backup server to copy data stored in HDDs 41-1 to 41-k of the storage device 1 and to store the data in the HDDs included in the another device 5. In the same manner, the storage device 1 copies data stored in the HDDs of the another device 5 and functions as a backup server to store the data in the HDDs 41-1 to 41-k included in the storage device 1.

In addition, in the embodiment, the storage device 1 uses a shared key encryption method of performing encrypted communication by the same encryption keys with the another device 5.
Herein, in the common [sic] key encryption method, the storage device 1 and the another device 5 share the same encryption keys with each other. In the embodiment, the storage device 1 and the another device 5 may share the encryption keys by creating the encryption keys by the same logic (for example, a function for creating the encryption keys with information of date as an argument) in each device.

The channel adaptor 2 is an interface controller connecting the storage device 1 and the another device 5 to communicate with each other. The channel adaptor 2 receives data transmitted from the another device 5 and performs storage in a buffer memory 23 temporarily, and then transfers the data to the control module 3 which will be described later, or transmits the data transferred from the control module 3 to the another device 5. That is, the channel adaptor 2 has a function of controlling the input and output (I/O) of the data with external devices such as the another device 5. In addition, the channel adaptor 2 has a function as an encryption/decryption unit 201 which will be described later.

As illustrated in Fig. 1, the channel adaptor 2 includes a CPU (Central Processing Unit) 20, a RAM (Random Access Memory) 21, a ROM (Read Only Memory) 22, and the buffer memory 23.
The buffer memory 23 stores data received from the another device 5 or data to be transmitted to the another device 5 temporarily. The ROM 22 is a memory device for storing a program executed by the CPU 20 and various data items.

The RAM 21 is a memory region that temporarily stores various data items or programs, and is used for temporarily storing and deploying data and programs when the CPU 20 executes programs. In addition, in the RAM 21, information regarding two encryption keys set by the control module 3 which will be described later, and information on validation/invalidation of transmission by each encryption key and validation/invalidation of reception by each encryption key are stored.

The two encryption keys stored in the RAM 21 may be the encryption keys themselves, or may be information for creating or specifying the encryption keys. Hereinafter, these are simply referred to as the "encryption keys".
Hereinafter, the information regarding the two encryption keys stored in the RAM 21, and information on validation/invalidation of transmission by each encryption key and validation/invalidation of reception by each encryption key is referred to as the "encryption key information".

The CPU 20 is a processing device which performs various controls and calculations, and executes various functions by executing the program stored in the ROM 22. That is, the CPU 20 functions as the encryption/decryption unit 201 as illustrated in Fig. 1.
The encryption/decryption unit 201 encrypts a packet which is transferred from the control module 3 and is to be transmitted to the another device 5 by using the encryption keys stored in the RAM 21. The encryption/decryption unit 201 decrypts the packet received from the another device 5 by using the encryption keys stored in the RAM 21 and transfers the packet to control module 3.

As described above, the storage device 1 performs the encrypted communication using IPsec with the another device 5 by the process of the encryption/decryption by the encryption/decryption unit 201.
The memory unit 4 includes a plurality of HDDs 41-1 to 41-k, and the plurality of HDDs 41-1 to 41-k receive various controls from the control module 3.
In the embodiment, the plurality of HDDs 41-1 to 41-k have the RAID configuration due to the control module 3.

In the plurality of HDDs 41-1 to 41-k, the process of reading/writing of the data is performed by the control module 3.
The memory unit 4 may utilize various memory media which are usable in the storage device, such as a plurality of SSDs (Solid State Drives) or the like, instead of the HDDs 41-1 to 41-k.

The control module (processing device) 3 performs various controls such as an access control to the memory unit 4, according to an access request from the another device 5. The control module 3 has functions as a determination unit 301 and a processing unit 302 which will be described later.
The control module 3 includes a CPU 30, a RAM 31, a ROM 32, and a clock 33.

The ROM 32 is a memory device for storing a program executed by the CPU 30 and various data items.
The RAM 31 is a memory region that temporarily stores various data items or programs, and is used for temporarily storing and deploying data and programs when the CPU 30 executes programs.

In addition, in the RAM 31, time (hereinafter, referred to as key time) at which the predetermined process (for example, generating and setting of the encryption key, and/or a switching of validation/invalidation of the encryption keys) associated with information to be processed (herein, the encryption key information) is executed, is stored corresponding to the encryption key information in advance. The RAM 31 may store a plurality of sets of the key time and the encryption key information.
For example, in the RAM 31, a first key time is stored corresponding to a predetermined process such as a process of generating new encryption keys to set the new encryption keys in the RAM 21 and a process of validating the reception by the new encryption keys. In addition, in the RAM 31, a second encryption key is stored corresponding to a predetermined process such as a process of validating the transmission by new encryption keys and a process of invalidating the transmission by old encryption keys. Further, in the RAM 31, a third key time is stored corresponding to a predetermined process such as a process of invalidating the reception by the old encryption keys.

Moreover, in the RAM 31, a key time corresponding to a process which is previously performed by the processing unit 302 which will be described later is stored as a key time at which the previous process was performed.
The key times described above may be key times themselves, or may be the information for specifying the times. Hereinafter, these are simply referred to as the "key times".
The clock 33 is for managing the time in the storage device 1, and manages the time using the clock generated by a crystal oscillator or the like. As the clock 33, for example, a real-time clock or the like is used. In Fig. 1, the clock 33 is included in the control module 3, however it is not limited thereto, and may be included in other parts in the storage device 1.

The CPU 30 is a processing device which performs various controls and calculations, and executes various functions by executing the program stored in the ROM 32. That is, the CPU 30 functions as the determination unit 301 and the processing unit 302 as illustrated in Fig. 1. The CPU 30 executes a process as the determination unit 301 and the processing unit 302 based on the time of the clock 33.
Herein, in the clock 33, deviations are generated of, for example, about several minutes over a month and about several hours over several years.

Thus, the CPU 30 includes, in addition to the functions as the determination unit 301 and the processing unit 302, a function of changing (adjusting) the time to be as reference, at the predetermined timing, or by an external command. The function of changing the time of the clock 33 by the CPU 30 is performed independently from the functions as the determination unit 301 and the processing unit 302. The time to be as reference may be obtained from time servers or the like (not illustrated), for example.

By changing the time of the clock 33 by the CPU 30 as described above, the time change to skip the time at which the predetermined process associated with the encryption key information is to be performed may be generated in some cases. In the embodiment, by the process of the determination unit 301 and the processing unit 302 which will be described later, the encryption key information of the control module 3 in which the time change is performed may be set in the normal state. In the embodiment, the storage device 1 and the another device 5 respectively change the encryption keys stored in the RAM 21 of the channel adaptor 2 in predetermined intervals (herein, every day), for improvement of security. That is, the storage device 1 and the another device 5 execute the predetermined process associated with the encryption key information at the key time stored in the RAM 31 in advance, in the respective devices. By this process, the encryption key information is updated, and the storage device 1 and the another device 5 may perform the mutual encrypted communication using the encryption keys changed in each of devices.

Further, the storage device 1 and the another device 5 have two encryption keys, and switch validation/invalidation of the transmission for each encryption key and validation/invalidation of the reception for each encryption key. When the reception by both of two encryption keys is valid, the reception may be performed by either of encryption keys.
The determination unit 301 determines whether or not the key time is included in the check period which is between the key time at which the previous process was performed and the current time at a check timing set for each predetermined time. Herein, the check timing is a regular time period set by a timer (not illustrated), and is set for two minutes in the embodiment. The function as the timer may be realized by the timing by the CPU 30, for example. The time of the clock 33 and the time by the timer are separated and independent from each other, and even when the time of the clock 33 is changed, the time by the timer is not influenced. In addition, the check period is a period between the key time at which the previous process was performed and which is stored in the RAM 31 and the current time, that is, the time of the clock 33.

Accordingly, the determination unit 301 determines whether or not the key time is included in the check period which is between the key time at which the previous process was performed and which is stored in the RAM 31 by the processing unit 302 and the time of the clock 33 at the check timing set for every two minutes.
For example, when the key time at which the previous time was performed is 0 o'clock as the second key time and the current time is one past eight, the determination unit 301 determines whether or not the key time is included in the check period which is between 0 o'clock as the second key time and one past eight as the current time. In this case, since the 8 o'clock as the third key time is included in the check period, the determination unit 301 determines that the key time is included in the check period at the current check timing, that is, the current time.

When the determination unit 301 determines that the key time is included in the check period, the processing unit 302 executes the predetermined process associated with the encryption key information (the information to be processed) which is to be performed at the key time.
That is, the processing unit 302 performs at least one process of generating of the encryption keys, or a switching of the validation or invalidation of the transmission or the reception by the encryption keys, as the predetermined process associated with the encryption key information, at the key time.

Specifically, when the determination unit 301 determinates that 16 o'clock is included in the check period as the first key time, the processing unit 302 performs a process of generating new encryption keys and sets the new encryption keys in the RAM 21, and validating the reception by the new encryption keys. When the determination unit 301 determines that 0 o'clock is included in the check period as the second key time, the processing unit 302 performs a process of validating the transmission by the new encryption keys and invalidating the transmission by the old encryption keys. Further, when the determination unit 301 determines that 8 o'clock is included in the check period as the third key time, the processing unit 302 performs a process of invalidating the reception by the old encryption keys.

As described above, by the functions as the determination unit 301 and the processing unit 302, the storage device 1 sets the process from the first key time to the third key time as one cycle, and updates the encryption key information.
The creating of the encryption keys or the switching of validation/invalidation of the transmission/reception by the encryption keys by the processing unit 302 may be performed by known various methods, and the detailed descriptions thereof are not made.

The detailed description of the process by the determination unit 301 and the processing unit 302 will be described later with reference to Fig. 2.
When the predetermined process which is to be executed at the key time which is included in the check time, is executed, the processing unit 302 stores the key time in the RAM 31 as the key time at which the previous process was performed.

Accordingly, it can be said that the control module 3 including the determination unit 301 and the processing unit 302 described above is a processing device which executes the predetermined process associated with the information to be processed at the preset key time.
In addition, it can be said that the RAM 31 is a storage unit which stores the key time at which the previous process was performed.

### (A-2) Updating of Encryption Key Information of First Embodiment

Hereinafter, the updating process of the encryption key information by the determination unit 301 and the processing unit 302 of the storage device 1 of the embodiment will be described using a transmission side enclosure and a reception side enclosure.

Fig. 2 is a view illustrating an updating procedure of the encryption key information of the transmission side enclosure and the reception side enclosure as an example of the first embodiment.
In the encrypted communication by the storage device 1 or the another device 5 of the embodiment, the transmission side enclosure is a device on a side of transmitting data, and the reception side enclosure is a device on a side of receiving the data. For a sake of convenience, in Fig. 2, the transmission side enclosure and reception side enclosure are distinguished from each other, however in practice, the device as the transmission side enclosure and the device as the reception side enclosure perform interactive transmission and reception between each other. Accordingly, each process in the transmission side enclosure and the reception side enclosure is executed in each of devices of the storage device 1 and the another device 5.

Hereinafter, the configuration of the storage device 1 described above is used when describing the transmission side enclosure and the reception side enclosure.
In an example illustrated in Fig. 2, the valid transmission period of the encryption keys is a day (24 hours), and the valid reception period is 40 hours obtained by adding each 8 hours to front and end of the valid transmission period. Accordingly, even when the deviations of the time of the clock included in the transmission side enclosure and the time of the clock included in the reception side enclosure are generated, the reception side enclosure allows the deviations of time of the first 8 hours and the last 8 hours, and may decrypt the received packet.

The valid transmission period is a period in which the encryption keys of the transmission side enclosure is valid, and if this period is passed, the transmission side enclosure may not encrypt the data for transmission using the encryption keys. The valid transmission period starts by the process of validating the transmission by the encryption keys of the transmission side enclosure (for example, the processing unit 302 of the storage device 1) and ends by the process of invalidating the transmission by the encryption keys of the transmission side enclosure. Accordingly, the valid transmission period is the period between the key time at which the process of validating the transmission by the encryption keys is performed, and the key time at which the process of invalidating the transmission by the encryption keys is performed, which are stored in the transmission side enclosure (for example, the RAM 31 of the storage device 1).

The valid reception period is a period in which the encryption keys of the reception side enclosure are valid, and if this period is passed, the reception side enclosure may not decrypt the received data using the encryption keys. The valid reception period starts by the process of validating the reception by the encryption keys of the reception side enclosure (for example, the processing unit 302 of the storage device 1) and ends by the process of invalidating the reception by the encryption keys of the reception side enclosure. Accordingly, the valid reception period is the period between the key time at which the process of validating the reception by the encryption keys is performed, and the key time at which the process of invalidating the reception by the encryption keys is performed, which are stored in the reception side enclosure (for example, the RAM 31 of the storage device 1).

As described above, by the functions of the determination unit 301 and the processing unit 302, the storage device 1 sets the process from the first key time to the third key time as one cycle, and updates the encryption key information.
Hereinafter, the updating process of the encryption key information by the functions of the determination unit 301 and the processing unit 302 of the storage device 1 described above will be described by dividing the updating process of the encryption key information for the transmission side enclosure and the reception side enclosure. As illustrated in Fig. 2, the transmission side enclosure and the reception side enclosure set the following processes of (1) to (3) as one cycle, and update the encryption key information.

In Fig. 2, the transmission side enclosure encrypts the transmission data based on the encryption key 2 for 26th of January until 16 o'clock on 26th of January. The reception side enclosure decrypts the received data based on the encryption key 2 for 26th of January until 16 o'clock on 26th of January. The process of (1) to (3) corresponds to the key times of the time points illustrated by arrows of (1) to (3) in Fig. 2.

### (1) 26th of January 16 o'clock (first key time)

· Transmission side enclosure: creates and sets the encryption key 1 for the next day (27th of January). (process of A1 in Fig. 2) · Reception side enclosure: creates and sets the encryption key 1 for the next day (27th of January) (A2), and validates the reception by the encryption key 1 for the next day (27th of January) (A3).

### (2) 27th of January 0 o'clock (second key time)

· Transmission side enclosure: validates the transmission by the encryption key 1 of the day (27th of January) (A4), and invalidates the transmission by the encryption key 2 of the previous day (26th of January) (A5).

### (3) 27th of January 8 o'clock (third key time)

· Reception side enclosure: invalidates the reception by the encryption key 2 of the previous day (26th of January) (A6).
As described above, the transmission side enclosure and the reception side enclosure execute the processes of A1 to A6 repeatedly by setting the processes of (1) to (3) as one cycle.
In addition, the transmission side enclosure and the reception side enclosure respectively create and set two encryption keys for each other, validate/invalidate the transmission and the reception, and update the encryption key information.

As described above, at the check timing set for every two minutes, when the determination unit 301 determinates that the key time is included in the check period which is between the key time at which the previous process was performed and the time of the clock 33, the processes (1) to (3) are executed by the processing unit 302.
Herein, as described above, the storage device 1 uses the plurality of encryption keys (herein, two). In the processing unit 302, even before the transmission by the one encryption key from the plurality of the encryption keys is validated and after the transmission is invalidated, the reception by the one of encryption keys and the other encryption key from the plurality of the encryption keys is validated in the predetermined period.

Specifically, as illustrated with a broken line in Fig. 2, for the encryption keys 1 and 2, the storage device 1 sets the valid reception period (herein, 40 hours) of the encryption key 1 or 2 used when decrypting the received packet, so as to be longer than the valid transmission period (herein, 24 hours) of the encryption key 1 or 2 used when encrypting the packet to be transmitted.
Accordingly, as illustrated in Fig. 2, in the reception side enclosure, for example, between 16 o'clock on 27th of January and 8 o'clock on 28th of January is the valid reception period for both the encryption keys 1 and 2. At this time, the reception side enclosure may decrypt the encrypted packet received from the transmission side enclosure by using any of the encryption keys 1 and 2. That is to say, even when the deviations of time are generated between the time of the clock included in the transmission side enclosure and the time of the clock included in the reception side enclosure, the reception side enclosure allows the predetermined time, that is, the deviations of time of the first 8 hours and the last 8 hours, and may decrypt the received packet.

(A-3) Operations of Determination Unit and Processing Unit in a Case of Changing Time of Clock of First Embodiment
Figs. 3(a) to 3(e) are views for illustrating a method determining whether or not the key time is included in the check period by the determination unit 301 of the storage device 1 as an example of the first embodiment.

In the example illustrated in Figs. 3(a) to 3(e), the predetermined process which is to be performed at 8 o'clock on 27th of January is executed by the processing unit 302, and the information of 8 o'clock on 27th of January is stored in the RAM 31 as the key time at which the previous process was performed. The state illustrated in Figs. 3(a) to 3(e) is the state after the change of the time of the clock 33 is performed by the CPU 30 and the time of the clock 33 is corrected as the current time after the process described above.

Fig. 3(a) illustrates an example when the current time is between 8 o'clock and 16 o'clock on 27th of January. Fig. 3(b) illustrates an example when the current time is between 16 o'clock on 27th of January and 0 o'clock on 28th of January. Fig. 3(c) illustrates an example when the current time is between 0 o'clock and 8 o'clock on 27th of January. Fig. 3(d) illustrates an example when the current time is between 0 o'clock and 8 o'clock on 28th of January. Fig. 3(e) illustrates an example when the current time is between 16 o'clock on 26th of January and 0 o'clock on 27th of January.

As described above, the determination unit 301 determinates whether or not the key time is included in the check period which is between the key time at which the previous process was performed and the current time at the check timing set for each predetermined time.
For example, the determination unit 301 determinates whether or not the key time is included in the check period which is between the key time at which the previous process was performed and the time of the clock 33 which are stored in the RAM 31 by the processing unit 302, at the check timing set for every two minutes.

Specifically, for example, the determination unit 301 determines whether or not the key time is included in the check period which is between 8 o'clock on 27th of January which is the key time at which the previous process was performed and the time of the clock 33 which is the current time, at the check timing set for every two minutes.
The check periods are illustrated by hatching in Figs. 3(a) to 3(e).
In a case illustrated in Fig. 3(a), the key time is not included in the check period. Accordingly, the determination unit 301 determines that the key time is not included in the check period, and waits for the next check timing after two minutes.

Next, in a case illustrated in Fig. 3(b), 16 o'clock on 27th of January which is the key time is included in the check period. Accordingly, the determination unit 301 determines that the key time is included in the check period, and the processing unit 302 performs the predetermined process which is to be executed at the key time. In addition, the processing unit 302 stores the information of 16 o'clock on 27th of January which is the key time in the RAM 31 as the new key time at which the previous process was performed. Then, the determination unit 301 waits for the next check timing after 2 minutes.

Herein, the state illustrated in Fig. 3(a) may occur when the time of the clock 33 is changed at the time between the key time at which the previous process was performed and the next key time. Specifically, the state in the example illustrated in Fig. 3(a) may occur when the time of the clock 33 is changed at the time between 8 o'clock and 16 o'clock on 27th of January. The state illustrated in Fig. 3(a) may occur in a case of the normal operation, that is, when the time of the clock 33 is not changed.

The state illustrated in Fig. 3(b) may occur when the time of the clock 33 is changed at the time between the next key time and the key time after the next key time. Specifically, the example illustrated in Fig. 3(b) may occur when the time of the clock 33 is changed at the time between 16 o'clock on 27th of January and 0 o'clock on 28th of January. The state illustrated in Fig. 3(b) may occur in a case of the normal operation, that is, when the time of the clock 33 is not changed.

Next, in a case illustrated in Fig. 3(c), the key time is not included in the check period. Accordingly, the determination unit 301 determines that the key time is not included in the check period and waits for the next check timing after two minutes.
The state illustrated in Fig. 3(c) may occur when the time of the clock 33 is changed at the time between the key time at which the process before the previous process was performed and the key time at which the previous process was performed, that is, when the time of the clock 33 is earlier than (in the past compared with) the key time at which the previous process was performed. Specifically, the state in the example illustrated in Fig. 3(c) may occur when the time of the clock 33 is changed at the time between 8 o'clock on 27th of January and 0 o'clock on 27th of January.

Moreover, in the case illustrated in Fig. 3(d), 16 o'clock on 27th of January and 0 o'clock on 28th of January which are key times are included in the check period, that is, the two key times are included. The state illustrated in Fig. 3(d) may occur when the time of the clock 33 is changed at the time later than (in the future compared with) the key time after the next key time. Specifically, the state in the example illustrated in Fig. 3(d) may occur when the time of the clock 33 is changed at the time later than (in the future compared with) 0 o'clock on 28th of January. At this time, the time of the clock 33 is changed at the time leaving equal to or more than 16 hours from the key time at which the previous process was performed.

That is, in such a case, even when the key time is not included in the check period, when the determination unit 301 determines that the two or more key times are included in the check period, the processing unit 302 performs an initialization of the encryption key information.
As described above, when the two or more key times are included in the check period, that is, when the deviation between the time of the clock 33 and the time of the clock included in the another device 5 is equal to or more than the time of the two key times, it is preferable to establish the encrypted communication between the storage device 1 and the another device 5 again.

This is because that, in the normal operation of the storage device 1, at the time later than (in the future compared with) the key time after the next key time, that is, in the example illustrated in Fig. 3(d), it is difficult to consider to change the time leaving equal to or more than 16 hours and there is a concern of a generation of some kind of serious abnormality in the storage device 1.
For example, when two or more key times are included in the check period, the processing unit 302 performs clearing of the valid transmission period and valid reception period of the encryption keys 1 and 2 or clearing of the encryption keys 1 and 2 stored in the RAM 21, and disconnects the storage device 1 from the another device 5. Then, the processing unit 302 and the channel adaptor 2 execute the initialization process (resetting of the encrypted communication with the another device 5) in the same manner when activating the storage device 1, establish the IPsec connection between the storage device 1 and the another device 5, and perform encrypted communication.

Accordingly, the processing unit 302 may solve the mismatching of the encryption key information caused by the generation of the deviation of the long time between the storage device 1 and the another device 5.
In a case illustrated in Fig. 3(e), 0 o'clock on 27th of January which is the key time is included in the check period. The state illustrated in Fig. 3(e) may occur when the time of the clock 33 is changed at the time earlier than (in the past compared with) the key time at which the process before the previous process was performed. Specifically, the state in the example illustrated in Fig. 3(d) [sic] may occur when the time of the clock 33 is changed at the time earlier than (in the past compared with) 0 o'clock on 27th of January. At this time, the time of the clock 33 is changed leaving equal to or more than 8 hours from the key time at which the previous process was performed.

In this case, that is, even when the determination unit 301 determines that the key time is included in the check time, when the current time is earlier than (in the past compared with) the key time at which the previous process was performed, the processing unit 302 performs an initialization of the encryption key information in a same manner as the case illustrated in Fig. 3(d).
In the cases illustrated in Figs. 3(d) and 3(e), the processing unit 302 may output some kinds of errors and alert to the administrator, instead of performing the initialization process. Alternately, it is desired that the processing unit 302 output some kinds of errors and alert to the administrator in conjunction with the initialization process. In addition, it is possible to perform the error output and the alerting to the administrator by known various methods, and the detailed description thereof is not made.

Fig. 4 is a flowchart illustrating the operation of the determination unit 301 and the processing unit 302 of the storage device 1 as an example of the first embodiment.
First, the determination unit 301 determines whether or not 0 o'clock, 8 o'clock, and 16 o'clock which are key times are included in the check period which is between the key time at which the previous process was performed and the current time of the clock 33 which are stored in the RAM 31, at the check timing set for each predetermined time, for example, for every 2 minutes (step S1).

In step S1, when the determination unit 301 determines that 0 o'clock, 8 o'clock, and 16 o'clock are not included in the check period (No route of step S1), the determination unit 301 waits for the next check timing.
On the other hand, in step S1, when the determination unit 301 determines that 0 o'clock, 8 o'clock, and 16 o'clock are included in the check period (Yes route of step S1), the determination unit 301 determines whether or not the current time of the clock 33 is in the past compared with the key time at which the previous process was performed (step S2).

In step S2, when the determination unit 301 determines that the current time is not in the past compared with the key time at which the previous process was performed (No route of step S2), the determination unit 301 determines whether or not the number of the key time included in the check period is one (step S3).
On the other hand, in step S2, when the determination unit 301 determines that the current time is in the past compared with the key time at which the previous process was performed (Yes route of step S2), the processing unit 302 initializes the encryption key information and establishes the IPsec connection between the storage device 1 and another device 5 again (step S9).

In step S3, when the determination unit 301 determines that the number of the key times included in the check period is not one (No route of step S3), the process proceeds to step S9.
On the other hand, in step S3, when the determination unit 301 determines that the number of key times included in the check period is one (Yes route of step S3), the determination unit 301 determines that the key time included in the check period is any one of 0 o'clock, 8 o'clock, and 16 o'clock (step S4).

In step S4, when the determination unit 301 determines that the key time included in the check period is 0 o'clock (0 o'clock route of step S4), the processing unit 302 executes the predetermined process which is to be executed at 0 o'clock. That is, the processing unit 302 validates the transmission by the encryption key of the day and invalidates the transmission by the encryption key of the previous day (step S5).
In step S4, when the determination unit 301 determines that the key time included in the check period is 8 o'clock (8 o'clock route of step S4), the processing unit 302 executes the predetermined process which is to be executed at 8 o'clock. That is, the processing unit 302 invalidates the reception by the encryption key of the previous day (step S6).

Further, in step S4, when the determination unit 301 determines that the key time included in the check period is 16 o'clock (16 o'clock route of step S4), the processing unit 302 executes the predetermined process which is to be executed at 16 o'clock. That is, the processing unit 302 generates the encryption key for the next day, stores the encryption key in the RAM 21, and validates the reception by the encryption key of the next day (step S7).

When any process of steps S5 to S7 is executed by the processing unit 302, the processing unit 302 stores the key time in the check period as the key time at which the previous process was performed, in the RAM 31 (step S8). After that, the determination unit 301 waits for next check timing.
According to the procedure described above, the determination unit 301 and the processing unit 302 execute the updating process of the encryption keys.

As described above, according to the storage device 1 as the example of the first embodiment, in the processing device for executing the predetermined process associated with the information to be processed at the preset key time, the determination unit 301 determines whether or not the key time is included in the check period which is between the key time at which the previous process was performed and the current time. When the determination unit 301 determines that the key time is included in the check period, the processing unit 302 executes the predetermined process which is to be executed at the key time.

For example, when the time of the clock 33 is changed and the time change to skip the key time at which the predetermined process associated with the encryption key information is to be performed is generated, the skipped key time is included in the check period between the key time at which the previous process was performed and the current time (see Fig. 3(b)).
Accordingly, the determination unit 301 may precisely detect the generation of the time change to skip the key time at which the predetermined process associated with the encryption key information is to be performed by the time change of the clock 33, and the processing unit 302 may execute the predetermined process which is to be performed at the key time. Accordingly, when generating the time change to skip the key time at which the predetermined process associated with the encryption key information is to be performed by the time change of the clock 33, the determination unit 301 and the processing unit 302 may set the encryption key information of the storage device 1 which performed the time change in the correct state.

When the time of the clock 33 before change is later than (in the future compared with) the key time, and the time of the clock 33 after the change is earlier than (in the past compared with) the key time, the key time is not included in the check period which is between the key time at which the previous process was performed and the current time (see Fig. 3(c)). Accordingly, when the time after the change approaches the key time at which the previous process was performed, the determination unit 301 and the processing unit 302 do not need to perform the process which was performed previously again at the key time.

Further, according to the first embodiment, even when the determination unit 301 determines that the key time is included in the check period, when the current time is in the past compared with the key time at which the previous process was performed, the processing unit 302 performs an initialization of the information to be processed. In addition, even when the determination unit 301 determines that the key time is included in the check period, when two or more key times are included in the check period, the processing unit 302 performs an initialization of the information to be processed.

Accordingly, the processing unit 302 may solve the mismatching of the encryption key information caused by the generation of the deviation of the long time between the storage device 1 and the another device 5.
According to the first embodiment, the storage device 1 as the processing device includes the RAM 31 as the storage unit which stores the key time at which the previous process was performed. Also, the determination unit 301 determines whether or not the key time is included in the check period by using the key time at which the previous process was performed and which is stored in the RAM 31.

Accordingly, since the key time at which the previous process was performed is stored in the RAM 31, even though the time change of the clock 33 is generated, the determination unit 301 may determine whether or not the key time at which the predetermined process is to be performed is included in the check period, based on the key time at which the previous process was performed and which is stored in the RAM 31 and the current time of the clock 33.
After the processing unit 302 executes the predetermined process which is to be performed at the key time which is determined to be included in the check period by the determination unit 301, the key time is stored in the RAM 31 as the key time at which the previous process was performed. That is, the processing unit 302 performs the predetermined process and then updates the key time at which the previous process was performed and which is stored in the RAM 31 by the key time at which the predetermined process was performed.

Accordingly, the control module 3 may easily determine that at which key time the predetermined process was executed from the preset key time, and the determination unit 301 may perform the determination whether or not the key time is included in the check period based on the key time at which the latest previous process was performed.
Further, as the predetermined process associated with the encryption key information, the processing unit 302 performs the process associated with the generation of the encryption keys, or the switching of validation or the invalidation of the transmission or the reception by the encryption keys, or any combination thereof, at key time. The plurality of the encryption keys are used for the encryption keys. Furthermore, in the processing unit 302, before the transmission by the one encryption key from the plurality of the encryption keys is validated and after the transmission is invalidated, during the predetermined period (herein, 8 hours) the reception by the one of the encryption key and the other encryption key from the plurality of the encryption keys is validated.

Accordingly, even when the deviations of the time of the clock 33 included in the storage device 1 and the time of the clock included in the another device 5 are generated, the storage device 1 allows the deviations of time of the first 8 hours and the last 8 hours, and may decrypt the received packet.

### (B) Modification Example of First Embodiment

The operations of the determination unit 301 and the processing unit 302 of the storage device 1 as an example of the first embodiment is not limited as described above, and for example, may be executed as a modification example of the first embodiment which will be described with reference to Figs. 5 and 6.

Unless otherwise specified, since the storage device 1 as an example of the modification example includes the configurations same as the storage device 1 as the example of the first embodiment described above, the description thereof will not be made.
In the modification example, the RAM 31 stores a previous process time instead of the key time at which the previous process was performed. The determination unit 301 of the modification example of the first embodiment determines whether or not the key time is included in the check period which is between the previous process time which is stored in the RAM 31 and the current time, at the check timing set for each predetermined time.

That is, in the modification example, the check period is between the previous process time and the current time. The previous process time described above may be the time itself or may be the information for specifying the time. Hereinafter, this will be simply referred to as "process time".
Specifically, the determination unit 301 determines whether or not the key time is included in the check period which is between the previous process time which is stored in the RAM 31 by the processing unit 302 and the time of the clock 33, at the check timing set for every two minutes, for example.

When the determination unit 301 determines that the key time is included in the check period, the processing unit 302 executes the predetermined process associated with the encryption key information (information to be processed) which is to be performed at the key time.
Specifically, processes corresponding to (1) to (3) described with reference to Fig. 2 are performed depending on which of 0 o'clock, 8 o'clock, and 16 o'clock is the key time included in the check period.

When the predetermined process which is to be executed at the key time included in the check period is executed, the processing unit 302 stores the information of the process time at which the predetermined process is executed in the RAM 31 as the previous process time. When the previous process time is stored in the RAM 31, the processing unit 302 may store the previous process time in the RAM 31 by accumulating the information of the earlier process time as the log of the process time.

Accordingly, it can be said that the control module 3 including the determination unit 301 and the processing unit 302 of the modification example of the first embodiment described above is the processing device that executes the predetermined process associated with the information to be processed at the preset key time.
In addition, it can be said that the RAM 31 is the storage unit that stores the previous process time.
Figs. 5(a) to 5(e) are views for illustrating a method of determining whether or not the key time is included in the check period by the determination unit 301 of the storage device 1 as the modification example of the first embodiment.

In the examples illustrated in Figs. 5(a) to 5(e), the processing unit 302 executes the predetermined process which is to be performed at 8 o'clock on 27th of January and the information for one past eight on 27th of January is stored in the RAM 31 as the previous process time. The states illustrated in Figs. 5(a) to 5(e) are the state after the change of the time of the clock 33 is performed by the CPU 30 and the time of the clock 33 is corrected as the current time after the process described above.

Fig. 5(a) illustrates an example when the current time is between 8 o'clock and 16 o'clock on 27th of January. Fig. 5(b) illustrates an example when the current time is between 16 o'clock on 27th of January and 0 o'clock on 28th of January. Fig. 5(c) illustrates an example when the current time is between 0 o'clock and 8 o'clock on 27th of January. Fig. 5(d) illustrates an example when the current time is between 0 o'clock and 8 o'clock on 28th of January. Fig. 5(e) illustrates an example when the current time is between 16 o'clock on 26th of January and 0 o'clock on 27th of January.

As described above, the determination unit 301 of the storage device 1 as the modification example, determines whether or not the key time is included in the check period which is between the previous process time and the current time at the check timing set for each predetermined time.
For example, the determination unit 301 determines whether or not the key time is included in the check period which is between the previous process time and the time of the clock 33 which are respectively stored in the RAM 31 by the processing unit 302, at the check timing set for every two minutes.

Specifically, for example, the determination unit 301 determines whether or not the key time is included in the check period which is between one past eight on 27th of January which is the previous process time and the time of the clock 33 which is the current time, at the check timing set for every two minutes.
The check periods are illustrated by hatching in Fig. 5.
In a case illustrated in Fig. 5(a), the key time is not included in the check period. Accordingly, the determination unit 301 determines that the key time is not included in the check period, and waits for the next check timing after two minutes.

Next, in a case illustrated in Fig. 5(b), 16 o'clock on 27th of January which is the key time is included in the check period. Accordingly, the determination unit 301 determines that the key time is included in the check period, and the processing unit 302 performs the predetermined process which is to be executed at the key time. In addition, the processing unit 302 stores the information of sixteen forty on 27th of January at which the process which is to be performed at 16 o'clock on 27th of January which is the key time was performed, in the RAM 31 as the new previous process time. Then, the determination unit 301 waits for the next check timing after 2 minutes.

Herein, the state illustrated in Fig. 5(a) may occur when the time of the clock 33 is changed at the time between the key time at which the previous process was performed and the next key time. Specifically, the state in the example illustrated in Fig. 5(a) may occur when the time of the clock 33 is changed at the time between 8 o'clock and 16 o'clock on 27th of January. The state illustrated in Fig. 5(a) may occur in a case of the normal operation, that is, when the time of the clock 33 is not changed.

In addition, the state illustrated in Fig. 5(b) may occur when the time of the clock 33 is changed at the time between the next key time and the key time after the next key time. Specifically, the state in the example illustrated in Fig. 5(b) may occur when the time of the clock 33 is changed at the time between 16 o'clock on 27th of January and 0 o'clock on 28th of January.
The state illustrated in Fig. 5(b) may occur in a case of the normal operation, that is, when the time of the clock 33 is not changed. For example, the time of the previous check timing corresponds to a case of "next key time" - "arbitrary time in predetermined time of check timing". At this time, the current check timing, that is, the current time is "next key time" + "predetermined time of check timing - the arbitrary time". Specifically, for example, when the time of the previous check timing is "16 o'clock on 27th of January" - "1 minute and 30 seconds (predetermined time of the check timing is two minutes)" = "15 o'clock 58 minutes and 30 seconds on 27th of January", the current time is "16 o'clock on 27th of January" + "2 minutes - 1 minutes and 30 seconds" = 16 o'clock 0 minutes and 30 seconds on 27th of January. Accordingly the state illustrated in Fig. 5(b) may occur even in a case of the normal operation, that is, when the time of the clock 33 normally passes.

Next, in a case illustrated in Fig. 5(c), 8 o'clock on 27th of January which is the key time is included in the check period. The state illustrated in Fig. 5(c) may occur when the time of the clock 33 is changed at the time between the key time at which the process before the previous process was performed, and the key time where the previous process was performed, that is, when the time of the clock 33 is earlier than (in the past compared with) the key time at which the previous process was performed. Specifically, the state in the example illustrated in Fig. 5(c) may occur when the time of the clock 33 is changed at the time between 8 o'clock on 27th of January and 0 o'clock on 27th of January.

In the case described above, that is, even when the determination unit 301 determines that the key time is included in the check period, when the current time is earlier than (in the past compared with) the previous process time, the processing unit 302 may inhibit the execution of the predetermined process which is to be performed at the key time. Then the determination unit 301 waits for the next check timing after two minutes.
For example, when the key time is included in the check period, and the current time is in the past compared with the previous process time, the key time included in the check period is the key time at which the previous process was performed (see Fig. 5(c)). In this case, since the predetermined process which is to be performed at the key time has already been executed at the previous process time, the processing unit 302 inhibits the predetermined process which is to be performed at the key time.

Accordingly, even when the key time is included in the check period and the current time is in the past compared with the previous process time, the determination unit 301 and the processing unit 302 may not perform the process which is performed previously at the key time again.
In addition, two key times are included in the check period in any cases of the cases illustrated in Figs. 5(d) and 5(e).

That is, in the case illustrated in Fig. 5(d), 16 o'clock on 27th of January and 0 o'clock on 28th of January which are key times are included in the check period. The state illustrated in Fig. 5(d) may occur when the time of the clock 33 is changed at the time later than (in the future compared with) the key time after the next key time. Specifically, the state in the example illustrated in Fig. 5(d) may occur when the time of the clock 33 is changed at the time later than (in the future compared with) 0 o'clock on 28th of January. At this time, the time of the clock 33 is changed leaving equal to or more than 16 hours from the previous process time.

In the case illustrated in Fig. 5(e), 0 o'clock on 27th of January and 8 o'clock on 27th of January which are key times are included in the check period. The state illustrated in Fig. 5(e) may occur when the time of the clock 33 is changed at the time which is earlier than (in the past compared with) the key time at which the process before the previous process was performed. Specifically, the state in the example illustrated in Fig. 5(e) may occur when the time of the clock 33 is changed at the time earlier than (in the past compared with) 0 o'clock on 27th of January.

As described above, in the cases illustrated in Figs. 5(d) and 5(e), that is, even when the determination unit 301 determines that the key time is included in the check period, when the determination unit determines that the two or more key times are included in the check period, the processing unit 302 performs an initialization of the encryption key information in the same manner as the first embodiment.
Fig. 6 is a flowchart for illustrating the operations of the determination unit 301 and the processing unit 302 of the storage device 1 as the modification example of the first embodiment.

In the procedure of the modification example of the first embodiment illustrated in Fig. 6, the processing order of steps S2 and S3 in Fig. 4 are changed to each other, and steps S20 and S21 are executed instead of step S2. Hereinafter, in Fig. 6, since the steps with the same reference numerals as the above described reference numerals denote the same or similar steps, parts of the description thereof will not be made.
Hereinafter, in step S1, a case where the determination unit 301 determines that 0 o'clock, 8 o'clock, and 16 o'clock are included in the check period, will be described.

In step S1, when the determination unit 301 determines that 0 o'clock, 8 o'clock, and 16 o'clock are included in the check period (Yes route of step S1), the determination unit 301 determines whether or not the number of the key times included in the check period is one (step S3).
In step S3, when determination unit 301 determines that the number of the key times included in the check period is not one (No route of step S3), the processing unit 302 initializes the encryption key information, and establishes the IPsec connection between the storage device 1 and the another device 5 again (step S9).

On the other hand, in step S3, when the determination unit 301 determines that the number of the key times included in the check period is one (Yes route of step S3), the determination unit 301 determines whether or not the current time of the clock 33 is in the past compared with the previous process time (step S20).
In step S20, when the determination unit 301 determines that the current time is not in the past compared with the key time at which the previous process was performed (No route of step S20), the determination unit determines whether or not the key time included in the check period is any of 0 o'clock, 8 o'clock, and 16 o'clock (step S4), and then performs the process in the order described with reference to Fig. 4.

On the other hand, in step S20, when the determination unit 301 determines that the current time is in the past compared with the key time at which the previous process was performed (Yes route of step S20), the processing unit 302 inhibits the execution of the predetermined process which is to be executed at the key time in the check period (step S21). After that, the determination unit 301 waits for the next check timing.

By the procedure described above, the determination unit 301 and the processing unit 302 execute the updating process of the encryption keys.
As described above, according to the modification example of the first embodiment, the same effect as the first embodiment described above is obtained. In addition, since the previous process time is stored in the RAM 31 as the storage unit, the control module 3 may easily determine the time at which the predetermined process which is to be performed at the previous key time was executed. Accordingly, the determination unit 301 may perform the determination whether or not the key time is included in the check period based on the latest previous process time.

In addition, since the RAM 31 may store the past process time as a log, the adjustment of the key time at which the predetermined process associated with the encryption key information is executed, the time of the check timing, or the like may be performed based on the log of the process time.

### (C) Others

Hereinbefore, the preferable embodiments of the present invention have been described, however the present invention is not limited to such specified embodiments, and can be realized with various modifications and changes in a range not departing from the spirit of the invention.

For example, hereinbefore, the case where the storage device 1 performs the encrypted communication using IPsec with the another device 5, has been described, however the present invention is not limited thereto, and each of a host device and a communication partner device may execute in the same manner even in other encrypted communication which generates encryption keys and performs a switching of validation/invalidation thereof.
In addition, although the case of the storage device 1 is described as the transmission side or the reception side device in the encrypted communication, the present invention is not limited thereto, and even in a case where a server, a personal computer or the like performs the encrypted communication as the transmission side or the reception side device, the same operation may be executed.

Further, the example in which the encryption/decryption unit 201 is included in the CPU 20 of the channel adaptor 2, and the determination unit 301 and the processing unit 302 are included in the CPU 30 of the control module 3, is described, however the present invention is not limited thereto. For example, the encryption/decryption unit 201, the determination unit 301, and the processing unit 302 may be included in any one of the CPU 20 and the CPU 30, or may be included in other CPU in the storage device 1 or in the external device.

The CPU 20 or/and the CPU 30 of the processing device may function as the encryption/decryption unit 201, the processing [sic] unit 301 and the determination [sic] unit 302, by executing the processing program.
The program (processing program) for realizing the functions as the encryption/decryption unit 201, the determination unit 301 and the processing unit 302 is provided in a form recorded on a computer-readable recording medium, such as a flexible disk, a CD (CD-ROM, CD-R, CD-RW or the like), a DVD (DVD-ROM, DVD-RAM, DVD-R, DVD+R, DVD-RW, DVD+RW, HD DVD or the like), a Blu-ray disc, a magnetic disk, an optical disc, or a magneto-optical disk. The computer uses a program by reading it from the recording medium, and transferring to and storing in an internal memory device or an external memory device. In addition, the program thereof may be recorded in a memory device (recording medium), for example, a magnetic disk, an optical disc, or a magneto-optical disc, to provide it to the computer from the memory device through a communication line.

When the functions as the encryption/decryption unit 201, the determination unit 301 and the processing unit 302 are realized, the program stored in the internal memory device (in the embodiment, the RAM 21 or ROM 22 of the channel adaptor 2 or/and the RAM 31 or the ROM 32 of the control module 3) is executed by a microprocessor (in the embodiment, the CPU 20 of the channel adaptor 2 or/and the CPU 30 of the control module 3) of the computer. At this time, the computer may read and execute the program recorded in the recording medium.

In the embodiment, the computer as a concept includes a hardware and an operating system, and means the hardware operating under the control of the operating system. In addition, when the operating system is not included and the hardware is operated by only the application program, the hardware itself corresponds to the computer. The hardware includes at least a microprocessor such as a CPU, and a means for reading the computer program recorded in the recording medium, and in the embodiment, the channel adaptor 2 or/and the control module 3 as the processing device have the function as the computer.

### REFERENCE SIGNS LIST

1: Storage device
2: Channel adaptor
20: CPU
201: Encryption/decryption unit
21: RAM
22: ROM
23: Buffer memory
3: Control module (Processing device)
30: CPU
301: Determination unit
302: Processing unit
31: RAM (Storage unit)
32: ROM
33: Clock
4: Memory unit
41-1 to 41-k: Hard disk drive (HDD)

## Claims

1. A processing device for executing predetermined process associated with information to be processed at preset key time, the processing device comprising:
a determination unit that determines whether or not key time is included in a check period which is between key time at which previous process was performed and current time, at a check timing set for each predetermined time; and
a processing unit that executes the predetermined process which is to be performed at the key time, when the determination unit determines that the key time is included in the check period.

2. The processing device according to claim 1,
wherein, even when the determination unit determines that the key time is included in the check period, when the current time is past than the key time at which the previous process was performed, the processing unit performs an initialization of the information to be processed.

3. The processing device according to claim 1 or 2,
wherein, even when the determination unit determines that the key time is included in the check period, when it is determined that two or more key times are included in the check period, the processing unit performs the initialization of the information to be processed.

4. The processing device according to any one of claims 1 to 3, further comprising
a storage unit that stores the key time at which the previous process was performed,
wherein the determination unit determines whether or not the key time is included in the check period, using the key time at which the previous process was performed and which is stored in the storage unit, and
after executing the predetermined process which is to be performed at the key time which was determined to be included in the check period by the determination unit, the processing unit stores the key time in the storage unit as the key time at which the previous process was performed.

5. A processing device for executing predetermined process associated with information to be processed at preset key time, the processing device comprising:
a determination unit that determines whether or not key time is included in a check period which is between previous process time and current time, at a check timing set for each predetermined time; and
a processing unit that executes the predetermined process which is to be executed at the key time, when the determination unit determines that the key time is included in the check period.

6. The processing device according to claim 5,
wherein, even when the determination unit determines that the key time is included in the check period, when the current time is past than the previous process time, the processing unit inhibits the executing of the predetermined process which is to be performed at the key time.

7. The processing device according to claim 5 or 6,
wherein, when the determination unit determines that the key time is included in the check period, when it is determined that two or more key times are included in the check period, the processing unit performs an initialization of the information to be processed.

8. The processing device according to any one of claims 5 to 7, further comprising
a storage unit that stores the previous process time,
wherein the determination unit determines whether or not the key time is included in the check period, using the previous process time which is stored in the storage unit, and
after executing the predetermined process which is to be executed at the key time which is determined to be included in the check period by the determination unit, the processing unit stores the process time at which the predetermined process is executed in the storage unit as the previous process time.

9. The processing device according to any one of claims 1 to 8,
wherein the information to be processed is encryption key information; and
the predetermined process is a process associated with a generation of an encryption key, or a switching validation or invalidation of transmission or reception by the encryption key, or any combination thereof.

10. The processing device according to claim 9,
wherein the encryption key is provided in plural; and
even before the transmission by one of encryption key from the plurality of the encryption keys is validated and after the transmission is invalidated, the reception by the one of encryption key and other encryption key from the plurality of the encryption keys is validated for predetermined period.

11. A processing method for executing predetermined process associated with information to be processed at preset key time, the processing method comprising:
a step of determining whether or not key time is included in a check period which is between key time at which the previous process was performed and current time, at a check timing set for each predetermined time; and
a step of executing the predetermined process which is to be performed at the key time, when it is determined that the key time is included in the check period.

12. A processing program for causing a computer to execute a process for executing predetermined process associated with information to be processed at preset key time, the process comprising:
a determination unit that determines whether or not key time is included in a check period which is between key time at which previous process was performed and current time, at a check timing set for each predetermined time; and
a processing unit that executes the predetermined process which is to be performed at the key time, when the determination unit determines that the key time is included in the check period.
